# EUROPÄISCHE PATENTSCHRIFT

(11) **EP 3 558 771 B1**
(45) Veröffentlichungstag und Bekanntmachung des Hinweises auf die Patenterteilung: **09.03.2022**
(21) Anmeldenummer: 17803951.7
(22) Anmeldetag: 24.11.2017
(51) Int. Cl.: B60T 8/32

(54) **BREMSSYSTEM MIT ZWEI DRUCKQUELLEN UND ZWEI VERFAHREN ZUM BETREIBEN EINES BREMSSYSTEMS**
BRAKE SYSTEM WITH TWO PRESSURE SOURCES AND TWO METHODS FOR OPERATING A BRAKE SYSTEM
SYSTÈME DE FREINAGE DOTÉ DE DEUX SOURCES D'AIR COMPRIMÉ ET DEUX PROCÉDÉS DE FONCTIONNEMENT D'UN SYSTÈME DE FREINAGE

(30) Priorität: 20.12.2016 DE 102016225537
(43) Veröffentlichungstag der Anmeldung: 30.10.2019
(73) Patentinhaber: Continental Teves AG & Co. OHG, 60488 Frankfurt am Main (DE)
(72) Erfinder: MAJ, Bartosz, 60385 Frankfurt (DE); KOLLMANN, Holger, 63110 Rodgau (DE); MILIC, Tomislav, 60435 Frankfurt am Main (DE); SCHÖNBOHM, Alexander, 61231 Bad Nauheim (DE); SCHRÖDER, Ralf, 61273 Wehrheim (DE); LENZ, Marc, 61267 Neu-Anspach (DE); BLETZ, Marcus, 35789 Weilmünster (DE); SCHMIDT, Jurij, 64367 Mühltal (DE); DINKEL, Dieter, 65824 Schwalbach (DE)
(74) Vertreter: Continental Corporation
(86) Internationale Anmeldenummer: PCT/EP2017/080297
(87) Internationale Veröffentlichungsnummer: WO 2018/114211

(56) Entgegenhaltungen:
- WO-A1-98/39189
- WO-A1-98/49038
- WO-A1-2014/131645
- WO-A1-2015/032637
- WO-A1-2015/074936
- WO-A1-2015/173134
- WO-A1-2016/000858
- DE-A1- 10 319 338
- US-A1- 2016 009 267

## Beschreibung

Die Erfindung betrifft ein Bremssystem, umfassend vier hydraulisch betätigbare Radbremsen, wobei jeder Radbremse jeweils ein stromlos geschlossenes Auslassventil zugeordnet ist, wobei jeder Radbremse jeweils ein stromlos offenes Einlassventil zugeordnet ist, umfassend einen mit einem Bremspedal betätigbaren Simulator, wobei zwei Druckbereitstellungseinrichtungen zum aktiven Druckaufbau in den Radbremsen vorgesehen sind. Sie betrifft weiterhin ein entsprechendes Betriebsverfahren.

In der Kraftfahrzeugtechnik finden "Brake-by-Wire"-Bremsanlagen eine immer größere Verbreitung. Derartige Bremsanlagen umfassen oftmals neben einem durch den Fahrzeugführer betätigbaren Hauptbremszylinder eine elektrisch ("by-Wire") ansteuerbare Druckbereitstellungseinrichtung, mittels welcher in der Betriebsart "Brake-by-Wire" eine Betätigung der Radbremsen stattfindet.

Bei diesen Bremssystemen, insbesondere elektrohydraulischen Bremssystemen mit der Betriebsart "Brake-by-Wire", ist der Fahrer von dem direkten Zugriff auf die Bremsen entkoppelt. Bei Betätigung des Pedals werden gewöhnlich eine Pedalentkopplungseinheit und ein Simulator betätigt, wobei durch eine Sensorik der Bremswunsch des Fahrers erfasst wird. Der Pedalsimulator dient dazu, dem Fahrer ein möglichst vertrautes Bremspedalgefühl zu vermitteln. Der erfasste Bremswunsch führt zu der Bestimmung eines Sollbremsmomentes, woraus dann der Sollbremsdruck für die Bremsen ermittelt wird. Der Bremsdruck wird dann aktiv von einer Druckbereitstellungseinrichtung in den Bremsen aufgebaut.

Das tatsächliche Bremsen erfolgt also durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. für den Fahrer komfortabel verwirklichen.

Die Druckbereitstellungseinrichtung in oben beschriebenen Bremssystemen wird auch als Aktuator bzw. hydraulischer Aktuator bezeichnet. Insbesondere werden Aktuatoren als Linearaktuatoren ausgebildet, bei denen zum Druckaufbau ein Kolben axial in einen hydraulischen Druckraum verschoben wird, der in Reihe mit einem Rotations-Translationsgetriebe gebaut ist. Die Motorwelle eines Elektromotors wird durch das Rotations-Translationsgetriebe in eine axiale Verschiebung des Kolbens umgewandelt.

Aus der DE 10 2013 204 778 A1 ist eine "Brake-by-Wire"-Bremsanlage für Kraftfahrzeuge bekannt, welche einen bremspedalbetätigbaren Tandemhauptbremszylinder, dessen Druckräume jeweils über ein elektrisch betätigbares Trennventil trennbar mit einem Bremskreis mit zwei Radbremsen verbunden sind, eine mit dem Hauptbremszylinder hydraulisch verbundene, zu- und abschaltbare Simulationseinrichtung, und eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, umfasst, wobei die Druckbereitstellungseinrichtung über zwei elektrisch betätigbare Zuschaltventile mit den Einlassventilen der Radbremsen verbunden ist.

In derartigen Bremssystemen ist gewöhnlich eine mechanische bzw. hydraulische Rückfallebene vorgesehen, durch die der Fahrer durch Muskelkraft bei Betätigung des Bremspedals das Fahrzeug abbremsen bzw. zum Stehen bringen kann, wenn die "By-Wire"-Betriebsart ausfällt oder gestört ist. Während im Normalbetrieb durch eine Pedalentkopplungseinheit die oben beschriebene hydraulische Entkopplung zwischen Bremspedalbetätigung und Bremsdruckaufbau erfolgt, wird in der Rückfallebene diese Entkopplung aufgehoben, so dass der Fahrer direkt Bremsmittel in die Bremskreise verschieben kann. In die Rückfallebene wird geschaltet, wenn mit Hilfe der Druckbereitstellungseinrichtung kein Druckaufbau mehr möglich ist.

Im Normalbetrieb betätigt bei einer derartigen Fremdkraftbremsanlage der Fahrer einen Pedalsimulator, wobei diese Pedalbetätigung durch Pedalsensoren erfasst wird und ein entsprechender Drucksollwert für den Linearaktuator zu Betätigung der Radbremsen ermittelt wird. Eine Bewegung des Linearaktuators aus seiner Ruhelage nach vorn in den Druckraum hinein verschiebt Bremsflüssigkeitsvolumen vom Linearaktuator über die geöffneten Ventile in die Radbremsen und bewirkt somit einen Druckaufbau. Im umgekehrten Fall führt die Bewegung des Linearaktuators zurück in Richtung seiner Ruhelage zu einem Druckabbau in den Radbremsen. Die Einstellung eines geforderten Systemdruckes erfolgt mit Hilfe eines geeigneten Druckreglers bzw. eines geeigneten Druckregelsystems, bei dem beispielsweise dem Druckregler ein Drehzahlregler unterlagert ist.

Es sind auch By-Wire-Bremsanlagen bekannt, bei denen zwei Druckbereitstellungseinrichtungen vorhanden sind. Beispielsweise kann jeweils eine Druckbereitstellungseinrichtung in einem Bremskreis Druck aufbauen.

Es ist grundsätzlich bekannt, dass ein hydraulisches Bremssystem von zwei unabhängigen Energieversorgungseinrichtungen mit elektrischer Energie versorgt wird, wobei die erste elektrische Energieversorgungseinrichtung die erste Druckbereitstellungseinrichtung versorgt und die zweite elektrische Energieversorgungseinrichtung die zweite Druckbereitstellungseinrichtung versorgt, wie z.B. in der WO 2014/131645 A1, WO 2016/000858 A1 und WO 2015/173134 A1 beschrieben.

Ein gattungsgemäßes Bremssystem mit zwei Druckbereitstellungseinrichtungen ist aus der WO 2015/032637 A1 bekannt.

Der Erfindung liegt die Aufgabe zugrunde, eine derartige Bremsanlage mit zwei Druckbereitstellungseinrichtungen anzugeben, die hohen Anforderungen an Ausfallsicherheit genügt. Weiterhin soll ein entsprechendes Betriebsverfahren angegeben werden.

Diese Aufgabe wird erfindungsgemäß durch ein Bremssystem gemäß Anspruch 1 gelöst.

Vorteilhafte Ausgestaltungen der Erfindung sind Gegenstand der Unteransprüche.

Die Erfindung geht von der Überlegung aus, dass bei einer Bremsanlage mit zwei elektrisch betätigbaren Druckbereitstellungseinrichtungen vorteilhaft wäre, dem Fahrer auch bei Ausfall der Stromversorgung einer Druckbereitstellungseinrichtung eine Rückfallebene mit aktivem Druckaufbau in den Radbremsen zur Verfügung zu stellen. Dadurch muss die Bremsanlage nicht für einen mechanischen Zugriff des Fahrers in der Rückfallebene ausgelegt werden, und es können beispielsweise ein trockener Simulator bzw. Hauptbremszylinder eingesetzt werden.

Wie nunmehr erkannt wurde, kann dies dadurch erreicht werden, dass zwei separate bzw. getrennte Bordnetze vorgesehen sind, wobei jedes der beiden Bordnetze eine der beiden Druckbereitstellungseinrichtungen speist. Dadurch kann auch beim Ausfall eines Bordnetzes immer aktiv Druck aufgebaut werden, so dass gewissermaßen eine Rückfallebene im By-Wire-Betrieb ermöglicht wird.

Es ist eine Trennvorrichtung vorgesehen, durch welche die beiden Bremskreise in einer Verbindungsstellung hydraulisch miteinander verbunden werden derart, dass jede Radbremse hydraulisch mit jeder der beiden Druckbereitstellungseinrichtungen hydraulisch verbunden ist und in einer Trennstellung voneinander hydraulisch getrennt werden. Die Trennvorrichtung wird von jedem der beiden Bordnetze gespeist. Dadurch wird erreicht, dass bei einem Ausfall eines der beiden Bordnetze die Trennvorrichtung in ihre Verbindungsstellung geschaltet wird, so dass die noch aktive Druckbereitstellungseinrichtung in beiden Bremskreisen aktiv Druck aufbauen kann.

Bevorzugt wird jede der elektrisch betätigbaren Druckbereitstellungseinrichtungen jeweils von genau einem bzw. von lediglich einem der beiden Bordnetze gespeist. Dies reduziert den Aufwand für die elektrischen Verbindungen.

Bevorzugt wird eine erste Druckbereitstellungseinrichtung der Druckbereitstellungseinrichtungen ausschließlich von einem ersten Bordnetz der Bordnetze gespeist und die andere (zweite) Druckbereitstellungseinrichtung der Druckbereitstellungseinrichtungen wird ausschließlich von dem anderen (zweiten) Bordnetz der Bordnetze gespeist.

Die zwei Bordnetze sind separat bzw. getrennt. Dies bedeutet vorteilhafterweise, dass die zwei Bordnetze voneinander elektrisch unabhängig sind in dem Sinne, dass ein Ausfall des ersten Bordnetzes keinen Ausfall des zweiten Bordnetzes bewirkt und umgekehrt. Z.B. sind die beiden Bordnetze galvanisch getrennt.

Vorteilhafterweise ist jede der beiden Druckbereitstellungseinrichtungen untrennbar mit zwei der stromlos offenen Einlassventile der Radbremsen eines Bremskreises hydraulisch verbunden und trennbar mit zwei weiteren der stromlos offenen Einlassventile der Radbremsen des anderen Bremskreises verbunden. Diese hydraulische Schaltung ermöglicht, dass in einer Normalbetriebsart jede der beiden Druckbereitstellungseinrichtungen in genau einem der beiden Bremskreise aktiv Druck aufbaut, während sie von den anderen beiden Einlassventilen der Radbremsen des anderen Bremskreises hydraulisch abgetrennt ist. Bei einem Ausfall einer der beiden Druckbereitstellungseinrichtungen kann aber bei Aufhebung der Trennung die noch funktionierende Druckbereitstellungseinrichtung in allen vier Radbremsen aktiv Druckaufbauen.

Dem jeweiligen Einlassventil ist bevorzugt kein Rückschlagventil hydraulisch parallelgeschaltet. Auf diese Weise wird erreicht, dass Bremsflüssigkeit bei gesperrtem bzw. geschlossenem Einlassventil in der Radbremse gehalten werden kann.

Für jedes Einlassventil ist bevorzugt jeweils eine Schließzustandsdetektionseinrichtung vorgesehen ist. Im Falle eines verklemmten Ventils, d.h. eines unbeabsichtigt geschlossenen Einlassventils, kann bei der Erkennung des geschlossenen Zustandes der Druckabbau in der jeweiligen Radbremse über das entsprechende stromlos geschlossene Auslassventil eingeleitet bzw. durchgeführt werden.

Jeweils zwei Einlassventile eines Bremskreises werden bevorzugt von dem gleichen Bordnetz gespeist. Bei Ausfall eines der beiden Bordnetzes gehen die entsprechenden Einlassventile in ihren stromlos offenen Zustand, so dass von der noch aktiven Druckbereitstellungseinrichtung Duck in den zugeordneten Bremsen aufgebaut werden kann.

In jedem Bremskreis wird vorteilhafterweise jeweils ein Auslassventil von einem der beiden Bordnetze gespeist. Bei Ausfall eines der beiden Bordnetze kann in jedem der beiden Bremskreise jeweils zumindest ein Auslassventil zum gezielten Druckaufbau angesteuert werden.

In einer bevorzugten Ausführungsform ist ein mit einem Bremspedal betätigbarer Simulator vorgesehen, wobei ein, bevorzugt redundant ausgeführter, Wegsensor zur Erfassung des Pedalwegs vorgesehen ist. Mit Hilfe des Pedalwegsensors wird ein Fahrerbremswunsch ermittelt, der bevorzugt einen Sollbremsdruck repräsentiert.

In einer bevorzugten Ausführungsform ist eine Trennvorrichtung vorgesehen, durch welche die beiden Bremskreise in genau einer Verbindungsstellung hydraulisch miteinander verbunden werden derart, dass jede Radbremse hydraulisch mit jeder der beiden Druckbereitstellungseinrichtungen hydraulisch verbunden ist und in einer Trennstellung voneinander hydraulisch getrennt werden.

Die Trennvorrichtung ist bevorzugt als ein stromlos geschlossenes Trennventil ausgebildet.

Vorteilhafterweise umfasst die Trennvorrichtung zwei Trennventile, von denen jeweils eines von genau einem der Bordnetze gespeist wird. Dabei sind bevorzugt zwei stromlos offene Ventile hydraulisch in Reihe geschaltet oder zwei stromlos geschlossene Ventile sind hydraulisch parallel geschaltet.

Die Vorteile der Erfindung liegen insbesondere darin, dass durch die beschriebene Konfiguration auch bei vollständigem Ausfall eines Bordnetzes noch aktiv in allen vier Radbremsen Druck aufgebaut werden, wodurch eine By-Wire-Rückfallebene realisiert wird. Der Simulator bzw. Hauptbremszylinder braucht dementsprechend keinen hydraulischen Zugriff auf die Bremsen.

Die Erfindung betrifft weiterhin ein Verfahren zum Betreiben eines erfindungsgemäßen Bremssystems.

Bevorzugt wird bei Ausfall eines der Bordnetze die Trennvorrichtung in ihre Verbindungsstellung geschaltet. So können alle Radbremsen mittels derjenigen Druckbereitstellungseinrichtung betätigt werden, deren Bordnetz nicht ausgefallen ist.

Bei einem erforderlichen Druckabbau in einer der Radbremsen und einem erkannten Schließzustand eines Einlassventils, welches sich nicht öffnen lässt, wird bevorzugt das der Radbremse zugeordnete Auslassventil geöffnet.

Ein Ausführungsbeispiel der Erfindung wird anhand einer Zeichnung näher erläutert. Darin zeigen in stark schematisierter Darstellung:
- FIG. 1: ein Bremssystem mit zwei unabhängigen Bordnetzen in einer bevorzugten Ausführungsform;
- FIG. 2: das Bremssystem gemäß FIG. 1 bei Ausfall eines Bordnetzes; und
- FIG. 3: das Bremssystem gemäß FIG. 1 bei Ausfall eines Bordnetzes.

Gleiche Teile sind in allen Figuren mit denselben Bezugszeichen versehen.

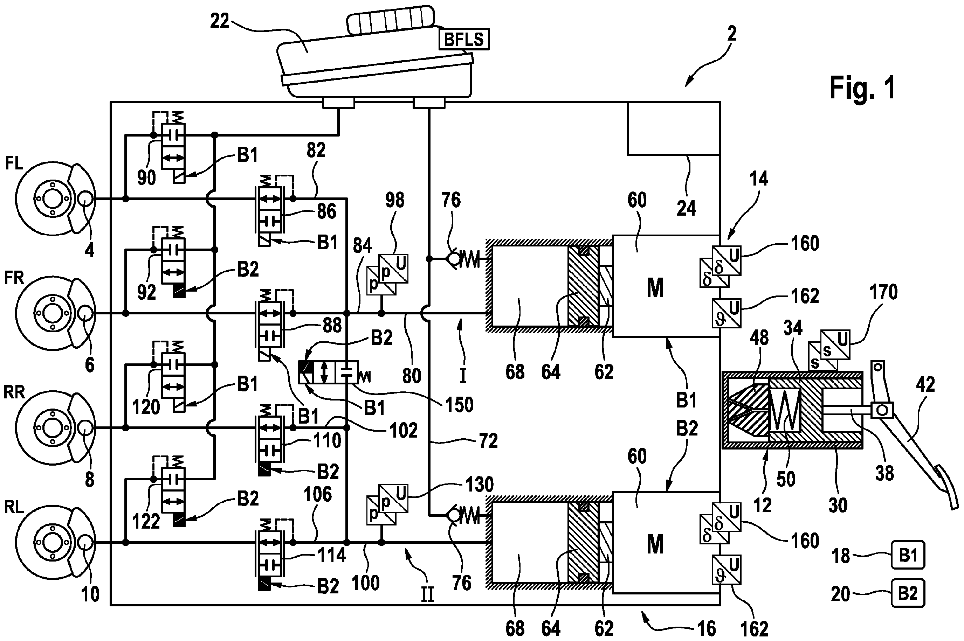

Ein in FIG. 1 dargestelltes Bremssystem 2 umfasst vier hydraulisch betätigbare Radbremsen 4, 6, 8, 10, einen Simulator 12, zwei Druckbereitstellungseinrichtungen 14, 16, zwei unabhängige Bordnetze 18, 20, einen unter Atmosphärendruck stehenden Druckmittelvorratsbehälter 22 und eine Steuer- und Regeleinheit 24.

Der im Sinne eines Hauptbremszylinders ausgebildete Simulator 12 umfasst einen in einem Hauptbremszylindergehäuse 30 angeordneten Hauptbremszylinderkolben 34, der über eine Kolbenstange 38 mit einem Bremspedal 42 gekoppelt ist. Bei Betätigung des Bremspedals 42 wird der Hauptbremszylinderkolben 34 gegen ein ebenfalls im Hauptbremszylindergehäuse 30 angeordnetes elastisches Element 48 gedrückt. Ein weiteres elastisches Element 50 stützt den Kolben 34 am elastischen Element 48 ab und drückt den Kolben 34 bei unbetätigtem Bremspedal in seine Ruhelage. Der Simulator 12 ist trocken ausgeführt, d.h. er umfasst keine Druckkammer, die mit Druckmittel befüllt ist. Der Simulator 12 ist gewissermaßen ein mit einem Hauptbremszylinder kombinierter Simulator.

Beide Druckbereitstellungseinrichtungen 14, 16 sind elektrisch betätigbar.

Hierzu weisen beide Druckbereitstellungseinrichtungen 14, 16 jeweils einen Elektromotor 60 auf, dessen rotatorische Bewegung mittels eines schematisch angedeuteten Rotations-Translationsgetriebes 62 in eine translatorische Bewegung eines Druckkolbens 64 umgesetzt wird, der zum aktiven Druckaufbau in den Radbremsen 4-10 in eine hydraulische Druckkammer 68 verschoben wird. Beide Druckkammern 68 sind über eine Ansaugleitung 72 mit dem Druckmittelvorratsbehälter 22 verbunden, wobei jeweils zwischen der Druckkammer 68 und der Ansaugleitung 72 ein Rückschlagventil 76 angeordnet ist, welches einen Fluss von Druckmittel aus dem Druckmittelvorratsbehälter 22 in die Druckkammer 68 erlaubt und in entgegengesetzter Richtung sperrt. Eine Systemdruckleitung 80 verbindet die Druckbereitstellungseinrichtung 14 hydraulisch mit Radbremsleitungen 80, 82, welche mit den Radbremsen 4, 6 verbunden sind. In die jeweilige Radbremsleitung 80, 82 ist jeweils ein stromlos offenes Einlassventil 86, 88 geschaltet. Zwischen Einlassventil 86 und Radbremse 4 sowie zwischen Einlassventil 88 und Radbremse 6 verzweigt jeweils eine Auslassleitung von der jeweiligen Radbremsleitung 82, 84 zum Druckmittelvorratsbehälter 22, in die jeweils ein stromlos geschlossenes Auslassventil 90, 92 geschaltet ist. Der Druck in der Systemdruckleitung 80 wird von einem bevorzugt redundant ausgebildeten Drucksensor 98 gemessen.

Eine Systemdruckleitung 100 verbindet die Druckbereitstellungseinrichtung 16 hydraulisch mit Radbremsleitungen 102, 106, welche mit den Radbremsen 8, 10 verbunden sind. In die jeweilige Radbremsleitung 102, 106 ist jeweils ein stromlos offenes Einlassventil 110, 114 geschaltet. Zwischen Einlassventil 110 und Radbremse 8 sowie zwischen Einlassventil 114 und Radbremse 10 verzweigt jeweils eine Auslassleitung von der jeweiligen Radbremsleitung 102, 106 zum Druckmittelvorratsbehälter 22, in die jeweils ein stromlos geschlossenes Auslassventil 120, 122 geschaltet ist. Der Druck in der Systemdruckleitung 100 wird von einem bevorzugt redundant ausgebildeten Drucksensor 130 gemessen.

Ein erster Bremskreis I umfasst die beiden mit der Druckbereitstellungseinrichtung 14 hydraulisch verbundenen Radbremsen 4, 6. Ein zweiter Bremskreis II umfasst die beiden mit der Druckbereitstellungseinrichtung 16 hydraulisch verbundenen Radbremsen 8, 10.

Die beiden Bremskreise I, II können durch eine stromlos geschlossene Trennvorrichtung 150, beispielsgemäß ist die Trennvorrichtung als ein elektrisch betätigbares Kreistrennventil ausgeführt, hydraulisch miteinander verbunden werden.

Die Aufteilung der beiden Bremskreise I, II ist schwarz-weiß; die beiden Radbremsen 4, 6 des Bremskreises I sind Vorderradbremsen, die beiden Radbremsen 8, 10 des Bremskreises II sind Hinterradbremsen.

Bei beiden Druckbereitstellungseinrichtungen 14, 16 wird die Rotorlage jeweils mit Hilfe eines bevorzugt redundant ausgeführten Rotorlagesensors 160. Ein Temperatursensor 162 misst die Temperatur der Motorwicklung. Der Pedalweg des Bremspedals 42 wird mit Hilfe eines bevorzugt redundant ausgeführten Pedalwegsensors 170 gemessen.

Das Bremssystem 2 ist dazu ertüchtigt, bei Ausfall eines der beiden Bordnetze noch aktiven Bremsdruckaufbau in allen vier Radbremsen 4, 6, 8, 10 zu ermöglichen. Dazu wird die Druckbereitstellungseinrichtung 14 von dem Bordnetz 18 gespeist (durch B1 gekennzeichnet), die Druckbereitstellungseinrichtung 16 wird von dem Bordnetz 20 gespeist (durch B2 gekennzeichnet).

Das Kreistrennventil 150 ist von beiden Bordnetzen 18, 20 aus schaltbar und wird auch von beiden Bordnetzen 18, 20 gespeist (durch B1 und B2 gekennzeichnet).

Die Einlassventile 86, 88 werden von dem Bordnetz 18 gespeist (jeweils durch B1 gekennzeichnet), die Einlassventile 110, 114 werden von dem Bordnetz 20 gespeist (jeweils durch B2 gekennzeichnet).

Im Bremskreis I wird das Auslassventil 90 von Bordnetz 18 (durch B1 gekennzeichnet) und das Auslassventil 92 von Bordnetz 20 gespeist (durch B2 gekennzeichnet). Im Bremskreis II wird das Auslassventil 120 von Bordnetz 18 (durch B1 gekennzeichnet) und das Auslassventil 122 von Bordnetz 20 gespeist (durch B2 gekennzeichnet).

Das Bremssystem 2 umfasst vorteilhafterweise insgesamt nur neun Magnetventile.

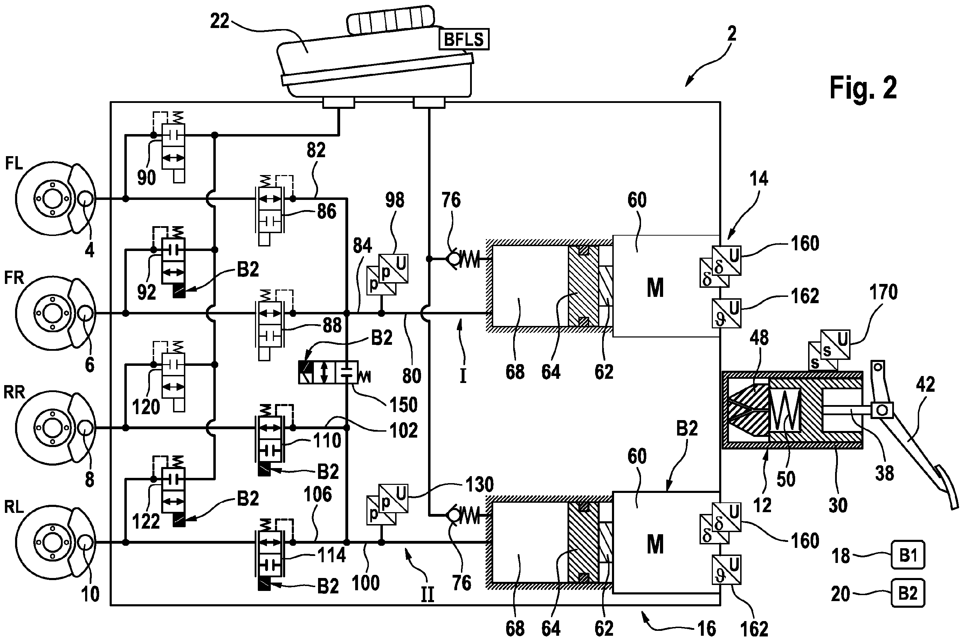

In FIG. 2 ist das Bremssystem 2 gemäß FIG. 1 dargestellt bei Ausfall einer Energieversorgung, nämlich des Bordnetzes 18 (B1), während Bordnetz 20 (B2) noch ordnungsgemäß funktioniert. Die Druckbereitstellungseinrichtung 14 ist deaktiviert, da sie nicht mehr vom Bordnetz 18 gespeist wird.

Die Auslassventile 90, 120, die nicht mehr mit Energie versorgt werden können, sind in ihren stromlos geschlossenen Zustand. Die Einlassventile 86, 88, die nicht mehr mit Energie versorgt werden können, sind in ihren stromlos offenen Zustand. Die Auslassventile 92, 122 sind schaltbar. Die Einlassventile 110, 114 sind schaltbar. Die Druckbereitstellungseinrichtung 15 wird mit der Energie des Bordnetzes 20 versorgt. Das von beiden Bordnetzen 18, 20 speisbare Trennventil 150 ist schaltbar und in seinem stromlos geschlossenen Zustand.

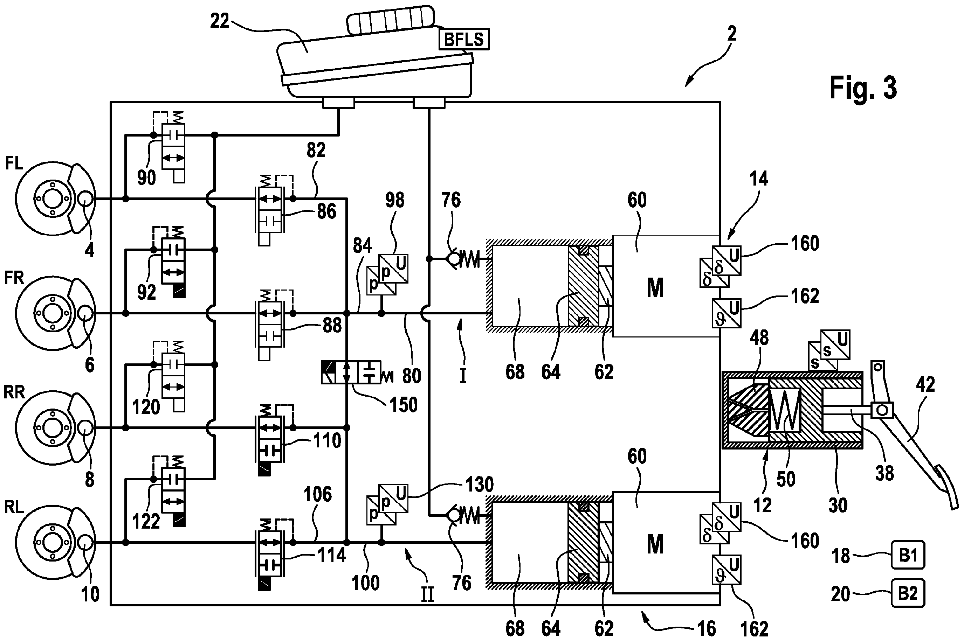

Auch bei vollständigem Ausfall des Bordnetzes 18 kann die Druckbereitstellungseinrichtung 16 in allen vier Radbremsen 4, 6, 8, 10 Bremsdruck aufbauen. Dazu wird das Trennventil 150 in seine stromlos offene Position geschaltet. In FIG. 3 ist die Konfiguration des Bremssystems 2 in diesem Zustand zu sehen. In Bremskreis II sind die Einlassventile 110, 114 von Bremskreis II noch schaltbar, da diese von Bordnetz 20 (B2) elektrisch gespeist werden. Die Einlassventile 86, 88 sind nicht mehr schaltbar, und befinden sich im stromlos offenen Zustand. Da das Trennventil 150 geöffnet ist, ist eine hydraulische Verbindung zwischen der

Druckbereitstellungseinrichtung 16 und dem Bremskreis I hergestellt, so dass mit Hilfe der

Druckbereitstellungseinrichtung 16 auch in den Radbremsen 4, 6 durch die offenen Einlassventile 86, 88 Druck aufgebaut werden kann.

In jedem der beiden Bremskreise I, II ist noch ein Auslassventil 92, 122 schaltbar. Auf diese Weise ist ein Raddruckabbau für jeweils beide Radbremsen 4, 6 bzw. 8, 10 über das noch schaltbare Auslassventil 92, 122 möglich (insbesondere auch bei geschlossenem Trennventil 150). Zudem ist eine ABS-Regelung im Select-low-Verfahren möglich, bei der das jeweilige Auslassventil 92, 122 als Drucksteuerventil eingesetzt wird.

Das erfindungsgemäße Bremssystem umfasst bevorzugt zumindest eine erste (4), eine zweite (6), eine dritte (8) und eine vierte Radbremse (10) sowie eine erste elektrisch steuerbare Druckbereitstellungseinrichtungen 14 und eine zweite elektrisch steuerbare Druckbereitstellungseinrichtungen 16 zum aktiven Druckaufbau in den Radbremsen. Es werden hydraulisch ein erster Bremskreis I und ein zweiter Bremskreise gebildet, wobei in dem ersten Bremskreis I die erste Druckbereitstellungseinrichtung 14 mit der ersten und der zweiten Radbremse 4, 6 hydraulisch verbunden ist und in dem zweiten Bremskreis II die zweite Druckbereitstellungseinrichtung 16 mit der dritten und der vierten Radbremse 8, 10 hydraulisch verbunden ist. Weiter sind ist ein erstes Bordnetz 18 und ein vom ersten Bordnetz separates, zweites Bordnetz 20 vorgesehen, wobei die erste Druckbereitstellungseinrichtung 14, insbesondere ausschließlich, von dem ersten Bordnetz 18 und die zweite Druckbereitstellungseinrichtung 16, insbesondere ausschließlich, von dem zweiten Bordnetz 20 gespeist wird.

Die erste Druckbereitstellungseinrichtung 14 ist untrennbar mit den stromlos offenen Einlassventilen 86, 88 der ersten und zweiten Radbremsen 4, 6 des ersten Bremskreises I hydraulisch verbunden und trennbar mit den der stromlos offenen Einlassventile 110, 114 der Radbremsen 8, 10 des zweiten Bremskreises II verbunden. Die zweite Druckbereitstellungseinrichtung 16 ist untrennbar mit den stromlos offenen Einlassventilen 110, 114 der dritten und vierten Radbremse 8, 10 des zweiten Bremskreises II hydraulisch verbunden und trennbar mit den stromlos offenen Einlassventile 86, 88 der Radbremsen 4, 6 des ersten Bremskreises I verbunden.

Anders ausgedrückt ist die entsprechende Druckbereitstellungseinrichtung eines bestimmten Bremskreises direkt mit den Einlassventilen der Radbremsen dieses Bremskreises verbunden und trennbar mit den Einlassventile der Radbremsen des anderen Bremskreises verbunden. Bevorzugt ist die entsprechende Druckbereitstellungseinrichtung eines bestimmten Bremskreises durch die Trennvorrichtung 150 trennbar mit den Einlassventilen der Radbremsen des anderen Bremskreises verbunden.

Der Begriff "untrennbar hydraulisch verbunden" ist demnach in dem Sinne "direkt hydraulisch verbunden" zu verstehen, d.h. dass kein Element, z.B. Ventil, in der hydraulischen Verbindung angeordnet ist, mittels welchem die Verbindung wiederholt gesteuert hergestellt oder unterbrochen werden könnte.

## Patentansprüche

1. Bremssystem (2), umfassend vier hydraulisch betätigbare Radbremsen (4, 6, 8 10), wobei jeder Radbremse (4, 6, 8, 10) jeweils ein stromlos geschlossenes Auslassventil (90, 92, 120, 122) zugeordnet ist und wobei jeder Radbremse (4, 6, 8, 10) jeweils ein stromlos offenes Einlassventil (86, 88, 110, 114) zugeordnet ist,
umfassend einen mit einem Bremspedal (42) betätigbaren Simulator (12),
wobei zwei Druckbereitstellungseinrichtungen (14, 16) zum aktiven Druckaufbau in den Radbremsen (4, 6, 8, 10) vorgesehen sind,
wobei zwei Bremskreise (I, II) hydraulisch gebildet sind, wobei in jedem Bremskreis (I, II) jeweils eine Druckbereitstellungseinrichtung (14, 16) mit zwei Radbremsen (4, 6, 8, 10) hydraulisch verbunden ist, **dadurch gekennzeichnet, dass** zwei separate Bordnetze (18, 20) vorgesehen sind, wobei jede Druckbereitstellungseinrichtung (14, 16) jeweils von einem der beiden Bordnetze (18, 20) gespeist wird, und wobei eine Trennvorrichtung (150) vorgesehen ist, durch welche die beiden Bremskreise (I, II) in einer Verbindungsstellung hydraulisch miteinander verbunden werden derart, dass jede Radbremse (4, 6, 8, 10) hydraulisch mit jeder der beiden Druckbereitstellungseinrichtungen (14, 16) hydraulisch verbunden ist, und in einer Trennstellung voneinander hydraulisch getrennt werden, wobei die Trennvorrichtung (150) von jedem der beiden Bordnetze (18, 20) gespeist wird.

2. Bremssystem (2) nach Anspruch 1, wobei jede der Druckbereitstellungseinrichtungen (14; 16) jeweils von genau einem der beiden Bordnetze (18; 20) gespeist wird.

3. Bremssystem (2) nach Anspruch 1 oder 2, wobei eine erste der Druckbereitstellungseinrichtungen (14) ausschließlich von einem ersten der Bordnetze (18) gespeist wird und die andere der Druckbereitstellungseinrichtungen (16) ausschließlich von dem anderen der Bordnetze (20) gespeist wird.

4. Bremssystem (2) nach einem der vorhergehenden Ansprüche, wobei jede der beiden Druckbereitstellungseinrichtungen (14, 16) untrennbar mit zwei der stromlos offenen Einlassventile (86, 88, 110, 114) der Radbremsen (4, 6; 8, 10) eines Bremskreises (I, II) hydraulisch verbunden ist und trennbar mit zwei weiteren der stromlos offenen Einlassventile (86, 88, 110, 114) der Radbremsen (4, 6; 8, 10) des anderen Bremskreises (I, II) verbunden ist.

5. Bremssystem (2) nach einem der vorhergehenden Ansprüche, wobei dem jeweiligen Einlassventil (86, 88, 110, 114) kein Rückschlagventil hydraulisch parallelgeschaltet ist.

6. Bremssystem (2) nach einem der vorhergehenden Ansprüche, wobei für jedes der Einlassventile (86, 88, 110, 114) jeweils eine Schließzustandsdetektionseinrichtung vorgesehen ist.

7. Bremssystem (2) nach einem der vorhergehenden Ansprüche, wobei jeweils die zwei Einlassventile (86, 88; 110, 114) eines Bremskreises (I, II) von dem gleichen Bordnetz (18, 20) gespeist werden.

8. Bremssystem (2) nach einem der vorhergehenden Ansprüche, wobei in jedem Bremskreis (I, II) jeweils ein Auslassventil (90, 92, 120, 122) von einem der beiden Bordnetze gespeist wird.

9. Bremssystem (2) nach einem der vorhergehenden Ansprüche, wobei ein Wegsensor zur Erfassung des Pedalwegs des Bremspedals (42) vorgesehen ist.

10. Bremssystem (2) nach einem der Ansprüche 1 bis 9, wobei die Trennvorrichtung (150) als ein stromlos geschlossenes Trennventil ausgebildet ist.

11. Bremssystem (2) nach einem der Ansprüche 1 bis 9, wobei die Trennvorrichtung (150) zwei Trennventile umfasst, von denen jeweils eines von genau einem der Bordnetze (18, 20) gespeist wird.

12. Verfahren zum Betreiben eines Bremssystems (2) nach einem der vorherigen Ansprüche, wobei bei Ausfall eines der Bordnetze (18, 20) die Trennvorrichtung in ihre Verbindungsstellung geschaltet wird.

13. Verfahren zum Betreiben eines Bremssystems (2) nach einem der Ansprüche 1 bis 11, wobei bei einem erforderlichen Druckabbau in einer der Radbremsen (4, 6, 8, 10) und einem erkannten Schließzustand eines Einlassventils (86, 88; 110, 114), welches sich nicht öffnen lässt, das der Radbremse (4, 6, 8, 10) zugeordnete Auslassventil (90, 92, 120, 122) geöffnet wird.

## Claims

1. Brake system (2), comprising four hydraulically actuable wheel brakes (4, 6, 8, 10), each wheel brake (4, 6, 8, 10) being assigned in each case one normally closed outlet valve (90, 92, 120, 122), and each wheel brake (4, 6, 8, 10) being assigned in each case one normally open inlet valve (86, 88, 110, 114),
comprising a simulator (12) which can be actuated by way of a brake pedal (42),
two pressure provision devices (14, 16) being provided for the active build-up of pressure in the wheel brakes (4, 6, 8, 10),
two brake circuits (I, II) being formed hydraulically, in each case one pressure provision device (14, 16) being connected hydraulically to two wheel brakes (4, 6, 8, 10) in each brake circuit (I, II),
**characterized in that** two separate on-board electrical systems (18, 20) are provided, each pressure provision device (14, 16) being fed in each case by one of the two on-board electrical systems (18, 20), and a disconnecting apparatus (150) being provided, by way of which the two brake circuits (I, II) are connected hydraulically to one another in a connecting position in such a way that each wheel brake (4, 6, 8, 10) is connected hydraulically to each of the two pressure provision devices (14, 16), and they are disconnected hydraulically from one another in a disconnecting position, the disconnecting apparatus (150) being fed by each of the two on-board electrical systems (18, 20).

2. Brake system (2) according to Claim 1, each of the pressure provision devices (14; 16) being fed in each case by precisely one of the two on-board electrical systems (18; 20).

3. Brake system (2) according to Claim 1 or 2, a first one of the pressure provision devices (14) being fed exclusively by a first one of the on-board electrical systems (18), and the other one of the pressure provision devices (16) being fed exclusively by the other one of the on-board electrical systems (20).

4. Brake system (2) according to one of the preceding claims, each of the two pressure provision devices (14, 16) being connected hydraulically in a manner which cannot be disconnected to two of the normally open inlet valves (86, 88, 110, 114) of the wheel brakes (4, 6; 8, 10) of a brake circuit (I, II), and being connected in a manner which can be disconnected to two further ones of the normally open inlet valves (86, 88, 110, 114) of the wheel brakes (4, 6; 8, 10) of the other brake circuit (I, II) .

5. Brake system (2) according to one of the preceding claims, no check valve being connected hydraulically in parallel with the respective inlet valve (86, 88, 110, 114) .

6. Brake system (2) according to one of the preceding claims, in each case one closed-state detection device being provided for each of the inlet valves (86, 88, 110, 114) .

7. Brake system (2) according to one of the preceding claims, in each case the two inlet valves (86, 88; 110, 114) of a brake circuit (I, II) being fed by the same on-board electrical system (18, 20).

8. Brake system (2) according to one of the preceding claims, in each case one outlet valve (90, 92, 120, 122) being fed by one of the two on-board electrical systems in each brake circuit (I, II).

9. Brake system (2) according to one of the preceding claims, a displacement sensor being provided for the detection of the pedal travel of the brake pedal (42).

10. Brake system (2) according to one of Claims 1 to 9, the disconnecting apparatus (150) being configured as a normally closed disconnecting valve.

11. Brake system (2) according to one of Claims 1 to 9, the disconnecting apparatus (150) comprising two disconnecting valves, of which in each case one is fed by precisely one of the on-board electrical systems (18, 20) .

12. Method for operating a brake system (2) according to one of the preceding claims, the disconnecting apparatus being switched into its connecting position in the case of failure of one of the on-board electrical systems (18, 20).

13. Method for operating a brake system (2) according to one of Claims 1 to 11, the outlet valve (90, 92, 120, 122) which is assigned to the wheel brake (4, 6, 8, 10) being opened in the case of a required pressure dissipation in one of the wheel brakes (4, 6, 8, 10) and a detected closed state of an inlet valve (86, 88; 110, 114) which cannot be opened.

## Revendications

1. Système de freinage (2), comprenant quatre freins de roue à actionnement hydraulique (4, 6, 8 10), chaque frein de roue (4, 6, 8, 10) étant associé à une soupape de sortie normalement fermée (90, 92, 120, 122) et chaque frein de roue (4, 6, 8, 10) étant associé à une soupape d'admission (86, 88, 110, 114) ouverte hors tension,
comprenant un simulateur (12) actionnable avec une pédale de frein (42),
deux moyens d'alimentation en pression (14, 16) étant prévus pour augmenter activement la pression dans les freins de roue (4, 6, 8, 10),
deux circuits de freinage (I, II) étant formés hydrauliquement,
un moyen d'alimentation en pression (14, 16) étant relié hydrauliquement à deux freins de roue (4, 6, 8, 10) dans chaque circuit de freinage (I, II), **caractérisé en ce que** deux réseaux de bord séparés (18, 20) sont prévus, chaque moyen d'alimentation en pression (14, 16) étant alimenté par l'un des deux réseaux de bord (18, 20), et un dispositif de séparation (150) étant prévu qui permet de relier les deux circuits de freinage (I, II) hydrauliquement l'un à l'autre dans une position de liaison de manière que chaque frein de roue (4, 6, 8, 10) soit relié hydrauliquement à chacun des deux moyens d'alimentation en pression (14, 16) et soient séparés hydrauliquement l'un de l'autre dans une position de séparation, le dispositif de séparation (150) étant alimenté par chacun des deux réseaux de bord (18, 20).

2. Système de freinage (2) selon la revendication 1, chacun des moyens d'alimentation en pression (14 ; 16) étant alimenté par exactement l'un des deux réseaux de bord (18 ; 20).

3. Système de freinage (2) selon la revendication 1 ou 2, un premier des moyens d'alimentation en pression (14) étant alimenté exclusivement par un premier des réseaux de bord (18) et l'autre des moyens d'alimentation en pression (16) étant alimenté exclusivement par l'autre des réseaux de bord (20).

4. Système de freinage (2) selon l'une des revendications précédentes, chacun des deux moyens d'alimentation en pression (14, 16) étant relié hydrauliquement de manière inséparable à deux des soupapes d'admission (86, 88, 110, 114), ouvertes hors tension, des freins de roue (4, 6; 8, 10) d'un circuit de freinage (I, II) et étant relié de manière séparable à deux autres soupapes d'admission (86, 88, 110, 114), ouvertes hors tension, des freins de roue (4, 6 ; 8, 10) de l'autre circuit de freinage (I, II).

5. Système de freinage (2) selon l'une des revendications précédentes, aucune soupape anti-retour n'étant montée hydrauliquement en parallèle à la soupape d'admission respective (86, 88, 110, 114).

6. Système de freinage (2) selon l'une des revendications précédentes, un moyen de détection d'état fermé étant prévu pour chacune des soupapes d'admission (86, 88, 110, 114).

7. Système de freinage (2) selon l'une des revendications précédentes, les deux soupapes d'admission (86, 88 ; 110, 114) d'un circuit de freinage (I, II) étant chacune alimentées par le même réseau électrique de bord (18, 20).

8. Système de freinage (2) selon l'une des revendications précédentes, une soupape de sortie (90, 92, 120, 122) étant alimentée dans chaque circuit de freinage (I, II) par l'un des deux réseaux de bord.

9. Système de freinage (2) selon l'une des revendications précédentes, un capteur de course étant prévu pour détecter la course de la pédale de frein (42) .

10. Système de freinage (2) selon l'une des revendications 1 à 9, le dispositif de séparation (150) étant conçu sous la forme d'une soupape de séparation fermée hors tension.

11. Système de freinage (2) selon l'une des revendications 1 à 9, le dispositif de séparation (150) comprenant deux soupapes de séparation dont l'une est alimentée par exactement un des réseaux de bord (18, 20) .

12. Procédé de commande d'un système de freinage (2) selon l'une des revendications précédentes, si l'un des réseaux de bord (18, 20) tombe en panne, le dispositif de séparation étant commuté dans sa position de liaison.

13. Procédé de commande d'un système de freinage (2) selon l'une des revendications 1 à 11, la soupape de sortie (90, 92, 120, 122), associée au frein de roue (4, 6, 8, 10), étant ouverte si une réduction de pression est requise dans l'un des freins de roue (4, 6, 8, 10) et si une soupape d'admission (86, 88 ; 110, 114) est détectée dans un état fermé, laquelle ne peut pas être ouverte.
